# EUROPEAN PATENT SPECIFICATION

(11) **EP 4 290 649 B1**
(45) Date of publication and mention of the grant of the patent: **01.10.2025**
(21) Application number: 23177061.1
(22) Date of filing: 02.06.2023
(51) Int. Cl.: H01M 10/48, H01M 50/213, H01M 50/247, H01M 50/296, H01M 50/581, H01M 10/42

(54) **POWER SUPPLY INCLUDING THERMISTORS DISPOSED ON ANODE ENDS OF BATTERY CELLS**
STROMVERSORGUNG MIT THERMISTOREN AUF DEN ANODENENDEN VON BATTERIEZELLEN
ALIMENTATION ÉLECTRIQUE COMPRENANT DES THERMISTANCES DISPOSÉES SUR LES EXTRÉMITÉS D'ANODE D'ÉLÉMENTS DE BATTERIE

(30) Priority: 06.06.2022 US 202263349330 P
(43) Date of publication of application: 13.12.2023
(73) Proprietor: Milwaukee Electric Tool Corporation, Brookfield, WI 53005 (US)
(72) Inventor: BROUWER, Mark E., Hartford, 53027 (US); BARROWCLIFT, Michael A., East Troy, 53120 (US); BECKER, Kyle R., Brookfield, 53045 (US); SPAULDING, Andrew J., Racine, 53402 (US)
(74) Representative: Forresters IP LLP

(56) References cited:
- CN-A- 109 149 017
- US-A1- 2008 280 192
- US-B1- 6 410 184

## Description

### RELATED APPLICATIONS

This application claims the benefit of U.S. Provisional Patent Application No. 63/349,330, filed June 6, 2022.

### FIELD

Embodiments described herein relate to portable power supplies.

### SUMMARY

One embodiment provides a portable power supply comprising a first battery cell assembly including a first frame supporting a plurality of first battery cells. The first frame includes a first outer side having a plurality of first openings at least partially exposing the plurality of first battery cells. The portable power supply further includes a second battery cell assembly coupled to the first battery cell assembly. The second battery cell assembly includes a second frame supporting a plurality of second battery cells having a second outer side. The second outer side is opposite the first outer side and includes a plurality of second openings at least partially exposing the plurality of second battery cells. The portable power supply also includes a plurality of first thermistors disposed on a first subset of the plurality of first battery cells. Each first thermistor is located on a first end face of a respective first battery cell of the first subset. The first end face of each respective first battery cell of the first subset is adjacent to the first outer side. The portable power supply additionally includes a plurality of second thermistors disposed on a second subset of the plurality of second battery cells. Each second thermistor is located on a second end face of a respective second battery cell of the second subset. The second end face of each respective second battery cell of the second subset is adjacent to the second outer side.

Another embodiment provides a portable power supply comprising a housing having a plurality of sides defining an internal cavity. The portable power supply further includes a battery cell assembly positioned in the internal cavity. The battery cell assembly includes a frame and a plurality of battery cells arranged in the frame. Each of the plurality of battery cells includes a cathode end, an anode end opposite the cathode end, and a body extending between the cathode end and the anode end. A thermistor is disposed on a respective battery cell of the plurality of battery cells. The thermistor is located nearer to the anode end than to the cathode end of the battery cell.

Another embodiment provides a method of manufacturing a portable power supply. The method includes securing a plurality of battery cells in corresponding openings of a frame, and coupling thermistors to a subset of the plurality of battery cells after securing the plurality of battery cells. Each thermistor is located on an end face of a respective battery cell.

Another embodiment provides a portable power supply comprising:
a first battery cell assembly including a first frame supporting a plurality of first battery cells, the first frame having a first outer side, the first outer side having a plurality of first openings at least partially exposing the plurality of first battery cells;
a second battery cell assembly coupled to the first battery cell assembly, the second battery cell assembly including a second frame supporting a plurality of second battery cells, the second frame having a second outer side, the second outer side being opposite the first outer side, the second outer side having plurality of second openings at least partially exposing the plurality of second battery cells;
a plurality of first thermistors disposed on a first subset of the plurality of first battery cells, each first thermistor located on a first end face of a respective first battery cell of the first subset, the first end face of each respective first battery cell of the first subset being adjacent to the first outer side; and
a plurality of second thermistors disposed on a second subset of the plurality of second battery cells, each second thermistor located on a second end face of a respective second battery cell of the second subset, the second end face of each respective second battery cell of the second subset being adjacent to the second outer side.

The plurality of first battery cells may include at least twenty battery cells, and the plurality of second battery cells may include at least twenty battery cells.

The plurality of first battery cells may include at least fifty battery cells, and the plurality of second battery cells may include at least fifty battery cells.

The first subset may include three battery cells, and the second subset may include three battery cells.

The first subset may include three battery cells, and the second subset may include four battery cells.

The plurality of first battery cells and the plurality of second battery cells may include cylindrical cells.

Each first end face of the respective first battery cell and each second end face of the respective second battery cell may be anode end faces.

Each of the plurality of first battery cells and each of the plurality of second battery cells may be connected by a wire to a bus bar positioned adjacent to the respective first or second battery cell.

The portable power supply may further comprise
a controller including an electronic processor configured to
receive an input signal, via the plurality of first thermistors, corresponding to a temperature of the respective first battery cell,
compare the input signal to a value corresponding to a maximum temperature threshold for the respective battery cell, and
   output an overtemperature signal when the input signal is greater than the maximum temperature threshold.

Another embodiment provides a portable power supply comprising:
a housing having a plurality of sides defining an internal cavity; and
a battery cell assembly positioned in the internal cavity, the battery cell assembly including
   a frame,
   a plurality of battery cells arranged in the frame, each of the plurality of battery cells including
      a cathode end,
      an anode end opposite the cathode end, and
      a body extending between the cathode end and the anode end, and
   a thermistor disposed on a respective battery cell of the plurality of battery cells, the thermistor located nearer to the anode end than to the cathode end of the battery cell.

The thermistor may be located nearer to an anode end than to a halfway point between the anode end and the cathode end.

The cathode end may include a cathode face of a respective battery cell, the anode end may include an anode face of the respective battery cell, and the thermistor may be located on the anode face.

The plurality of battery cells may include cylindrical cells, and the thermistor may be disposed on a curved wall of the respective battery cell.

The portable power supply may further comprise
a controller including an electronic processor configured to
receive an input signal, via the thermistor, corresponding to a temperature of the respective battery cell,
compare the input signal to a value corresponding to a maximum temperature threshold for the respective battery cell, and
   output an overtemperature signal when the input signal is greater than the maximum temperature threshold.

The portable power supply may further comprise
a display configured to
receive the overtemperature signal,
in response to receiving the overtemperature signal, provide an indication that the battery cell assembly is overtemperature.

The controller may be further configured to
in response to a determination that the respective battery cell is overtemperature, disable the portable power supply.

Each of the plurality of battery cells may be connected by a wire to a bus bar positioned adjacent to the respective battery cell.

The battery cell assembly may include three thermistors coupled to respective battery cells.

The battery cell assembly may include four thermistors coupled to respective battery cells.

Another embodiment provides a method of manufacturing a portable power supply, the method comprising:
securing a plurality of battery cells in corresponding openings of a frame; and
coupling thermistors to a subset of the plurality of battery cells after securing the plurality of battery cells, each thermistor located on an end face of a respective battery cell.

Other aspects of the disclosure will become apparent by consideration of the detailed description and accompanying drawings.

### BRIEF DESCRIPTION OF THE DRAWINGS

FIG. 1 illustrates a perspective view of a portable power supply device.
FIG. 2 illustrates a perspective view of an internal power source according to some embodiments.
FIG. 3 illustrates a perspective view of an internal power source according to some embodiments.
FIG. 4 illustrates a perspective view of an internal power source according to some embodiments.
FIG. 5 illustrates an exploded view of a battery cell assembly according to some embodiments.
FIG. 6 illustrates a cross-sectional view of a battery cell assembly according to some embodiments.
FIG. 7 illustrates a cross-sectional view of a battery cell assembly according to some embodiments.
FIG. 8 is a block diagram of a control system for a power supply according to some embodiments.

### DETAILED DESCRIPTION

US 6410184 B1 describes a power source holding a plurality of parallel oriented power modules in a holder-case.

CN109149017A describes a battery thermal management test system and method, which are used for testing a battery thermal management device.

Before any embodiments of the invention are explained in detail, it is to be understood that the invention is not limited in its application to the details of construction and the arrangement of components set forth in the following description or illustrated in the following drawings.

Relative terminology, such as, for example, "about", "approximately", "substantially", etc., used in connection with a quantity or condition would be understood by those of ordinary skill to be inclusive of the stated value and has the meaning dictated by the context (for example, the term includes at least the degree of error associated with the measurement of, tolerances (e.g., manufacturing, assembly 204, use, etc.) associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10% or more) of an indicated value.

Also, the functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way but may also be configured in ways that are not listed.

Furthermore, some embodiments described herein may include one or more electronic processors configured to perform the described functionality by executing instructions stored in non-transitory, computer-readable medium. Similarly, embodiments described herein may be implemented as non-transitory, computer-readable medium storing instructions executable by one or more electronic processors to perform the described functionality. As used in the present application, "non-transitory computer-readable medium" comprises all computer-readable media but does not consist of a transitory, propagating signal. Accordingly, non-transitory computer-readable medium may include, for example, a hard disk, a CD-ROM, an optical storage device, a magnetic storage device, a Read Only memory 445 (ROM), a Random Access memory 445 (RAM), register memory 445, a processor cache, or any combination thereof.

Many of the modules and logical structures described are capable of being implemented in software executed by a microprocessor or a similar device or of being implemented in hardware using a variety of components including, for example, application specific integrated circuits (ASICs). Terms like "controller 300" and "module" may include or refer to both hardware and/or software. Capitalized terms conform to common practices and help correlate the description with the coding examples, equations, and/or drawings. However, no specific meaning is implied or should be inferred simply due to the use of capitalization. Thus, the claims should not be limited to the specific examples or terminology or to any specific hardware or software implementation or combination of software or hardware.

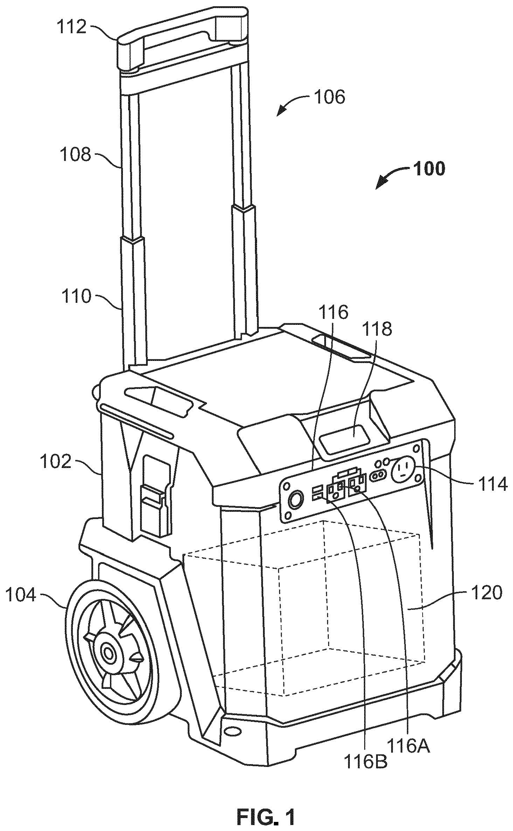

FIG. 1 illustrates a portable power supply 100 device or power supply 100. The power supply 100 includes, among other things, a housing 102. In some embodiments, the housing 102 includes one or more wheels 104 and a handle assembly 106. The housing 102 of power supply 100 further includes a power input unit 114, a power output unit 116, and a display 118. In the illustrated embodiment, the power input unit 114 includes multiple electrical connection interfaces configured to receive power from an external power source. In some embodiments, the external power source is a DC power source. For example, the DC power source may be one or more photovoltaic cells (e.g., a solar panel), an electric vehicle (EV) charging station, or any other DC power source. In some embodiments, the external power source is an AC power source. For example, the AC power source may be a conventional wall outlet, such as a 120 V outlet or a 240 V outlet, found in North America. As another example, the AC power source may be a conventional wall outlet, such as a 220V outlet or 230V outlet, found outside of North America. In some embodiments, the power input unit 114 is replaced by or additionally includes a cable configured to plug into a conventional wall outlet. The power received by the power input unit 114 may be used to charge a core battery, or internal power source 120, disposed within the housing 102 of power supply 100.

The power received by the power input unit 114 may also be used to provide power to one or more devices connected to the power output unit 116. The power output unit 116 includes one more power outlets. In the illustrated embodiment, the power output unit 116 includes a plurality of AC power outlets 116A and DC power outlets 116B.

In some embodiments, the DC power outlets 116B include one or more receptacles for receiving and charging power tool battery packs. In such embodiments, power tool battery packs received by, or connected to, the battery pack receptacles are charged with power output by the internal power source 120 and/or power received directly from the external power source. In some embodiments, power tool battery packs connected to the battery pack receptacles are used to provide power to the internal power source 120 and/or one or more peripheral devices connected to outlets of the power output unit 116. In some embodiments, the power output unit 116 includes tool-specific power outlets. For example, the power output unit 116 may include a DC power outlet used for powering a welding tool.

The display 118 is configured to indicate a state of the power supply 100 to a user, such as state of charge of the internal power source 120 and/or fault conditions. For example, the display 118 may be configured to indicate an overtemperature event and/or an undertemperature event. In some embodiments the display 118 includes one or more light-emitting diode ("LED") indicators configured to illuminate and display 118 a current state of charge of internal power source 120. In some embodiments, the display 118 is, for example, a liquid crystal display 118 ("LCD"), a light-emitting diode ("LED") display 118, an organic LED ("OLED") display 118, an electroluminescent display 118 ("ELD"), a surface-conduction electron-emitter display 118 ("SED"), a field emission display 118 ("FED"), a thin-film transistor ("TFT") LCD, etc. In other embodiments, the power supply 100 does not include a display 118.

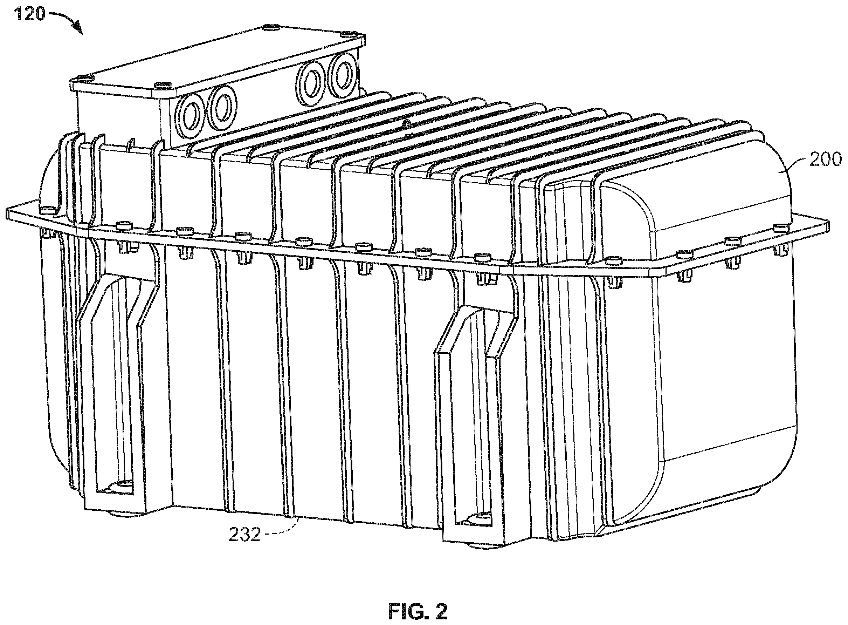

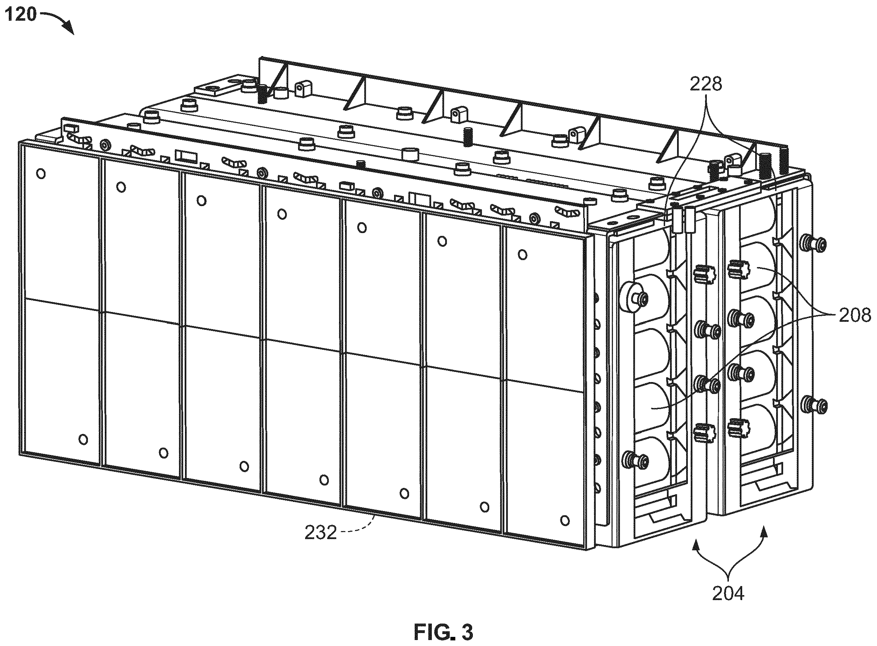

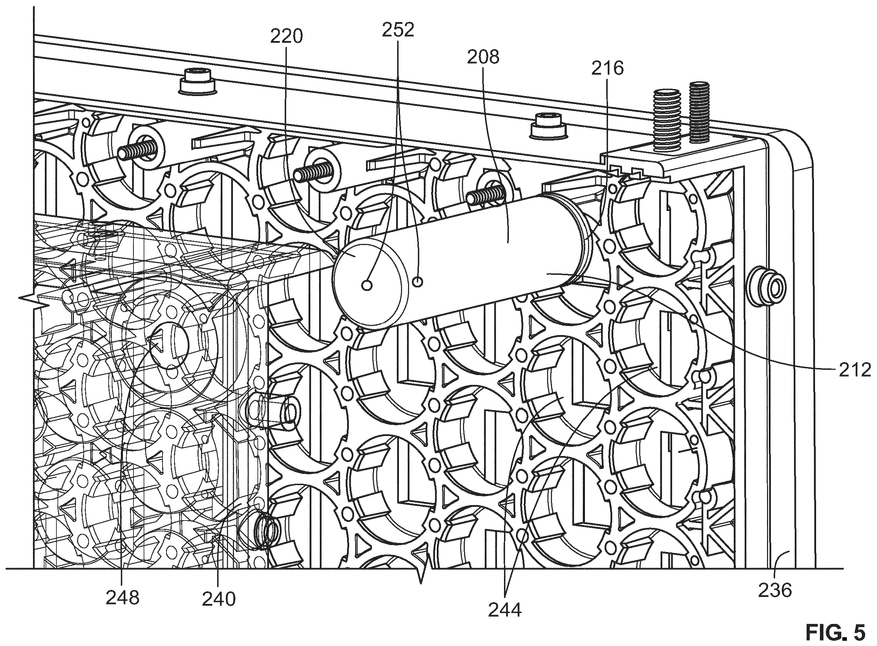

FIGS. 2-5 illustrate the internal power source 120 according to some embodiments. The internal power source 120 may include a power source housing 200 and a plurality of battery cell assemblies 204 received within an internal cavity 206 defined by the power source housing 200. The power source housing 200 is sealed such that the internal cavity 206 is not in fluid communication with an exterior of the internal power source 120. In the illustrated embodiment, the internal power source 120 includes two battery cell assemblies 204. In other embodiments, the internal power source 120 may include one or more battery cell assemblies 204 (e.g., three, four, etc.). The battery cell assemblies 204 may be fastened together by brackets or any suitable fastener at the ends of each assembly 204. In some embodiments, the internal power source 120 includes a first battery cell assembly 204 and a second battery cell assembly 204 substantially similar to the first battery cell assembly 204.

Each battery cell assembly 204 may include a plurality of battery cells 208, a plurality of connectors 224, and frame 228 supporting the plurality of battery cells 208 within the internal cavity 206. Each battery cell 208 has a body 212 extending between a first end 216 a second end 220. In some embodiments, the plurality of connectors 224 are a plurality of bus bars 224. Each end of the battery cell 208 may be defined by an end face, or terminal, of the battery cell 208. The first end 216 of the battery cell 208 may be a cathode end 216 and the second end 220 may be an anode end 220. In some embodiments, the plurality of battery cells 208 include cylindrical battery cells 208, wherein each body 212 of the respective battery cell 208 includes a curved wall.

Each battery cell assembly 204 is arranged within the internal cavity 206 such that each of the battery cells 208 are oriented relative to a longitudinal axis 232 of the power source housing 200. The plurality of battery cells 208 are arranged in a matrix. In some embodiments, such as those illustrated, the rows and/or columns of the matrix are staggered. In some embodiments, the rows and columns of the matrix are aligned. In some embodiments, each battery cell assembly 204 includes seventy battery cells 208. However, the number of battery cells 208 included in each battery cell assembly 204 is not limited to 70 and may be more than seventy or less than seventy. For example, each battery cell assembly 204 may include twenty battery cells 208, fifty battery cells 208, or eighty battery cells 208. In other embodiments, the battery cell assembly 204 may include two or more battery cells 208. The power source housing 200 is shaped and sized to receive a predetermined number of battery cell assemblies 204 in which each battery cell assembly 204 has a portion of the predetermined number of battery cells 208.

Each battery cell 208 may have a nominal voltage between about 3 V and about 5 V and may have a nominal capacity between about 2 Ah and about 6 Ah (in some cases, between about 3 Ah and about 5 Ah). The battery cells 208 may be any rechargeable battery cell 208 chemistry type, such as, for example, lithium (Li), lithium-ion (Li-ion), other lithium-based chemistry, nickel-cadmium (NiCd), nickel-metal hydride (NiMH), etc. The battery cells 208 may be connected in series, parallel, or combination series-parallel to provide the desired electrical characteristics (e.g., nominal voltage, current output, current capacity, power capacity, etc.) of the internal power source 120.

The frame 228 of each battery cell assembly 204 includes an inner support body 236 and an outer support body 240 defining a plurality of openings 244. Each opening 244 is configured to align with one of the battery cells 208 within the internal cavity 206. The openings 244 on the inner support body 236 may be configured to receive the cathode end 216 of the battery cell 208, and the openings 244 on the outer support body 240 may be configured to receive the anode end 220 of the battery cell 208, such that the anode end 220 is adjacent to an outer side of the frame 228. Therefore, each end of the respective battery cell 208 is seated in one of the openings 244. The plurality of battery cells 208 may be glued, screwed, or otherwise fastened to the inner and outer support bodies. The outer support body 240 may further include a plurality of through holes 248, each hole 248 corresponding to an opening 244, for accessing the anode end 220 of the plurality of battery cells 208 after the plurality of battery cells 208 have been seated in the inner cavity.

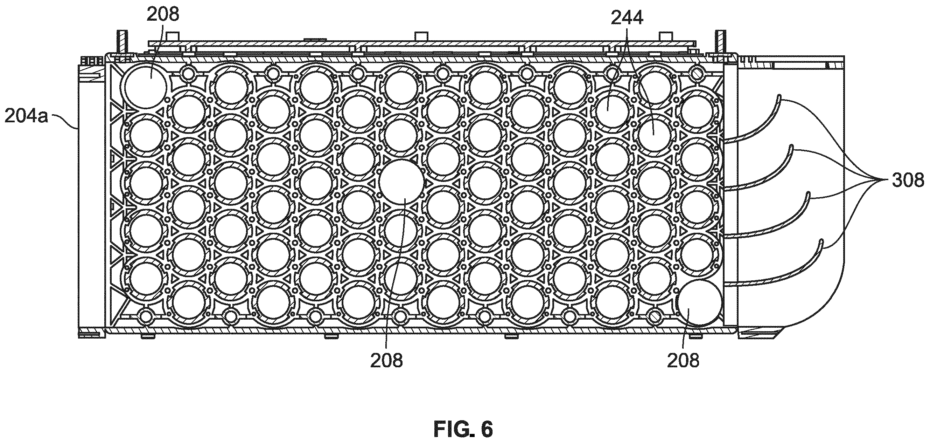

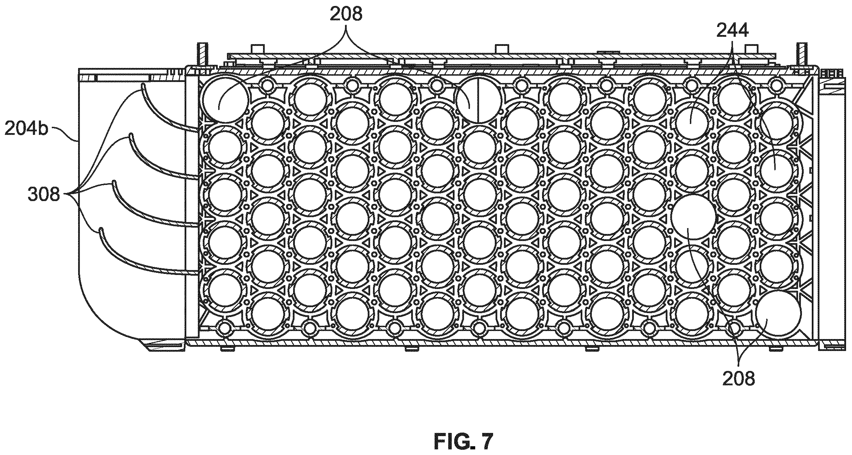

In some embodiments, a plurality of thermistors 252 is disposed on or otherwise coupled to a subset the plurality of battery cells 208. The thermistor 252 may be located nearer to the anode end 220 than to a halfway point between the anode end 220 and the cathode end 216. In some embodiments, the thermistor 252 may be located on the body 212 of the respective battery cell 208 near the anode end 220. In some embodiments, the thermistor 252 may be positioned on the end face of the anode end 220 of the battery cell 208. In some embodiments, such as those illustrated in FIGS. 6-7, a first battery cell assembly 204a may include a plurality of first thermistors 252 may be disposed on a first subset of the plurality of battery cells 208, and a second battery cell assembly 204b may include a plurality of second thermistors 252 disposed on a second subset of the plurality of battery cells 208. The first subset may include three battery cells 208, and the second subset may include four battery cells 208. In some embodiments, the first and second subsets each include three battery cells 208. In some embodiments, each subset includes at least one battery cell 208.

The thermistor 252 may be configured to measure a temperature of the battery cell 208, or of the battery cell assembly 204. The thermistor 252 may be electrically connected to a controller 300. Wires of the thermistor 252 may be routed via wire trap features on the exterior of the outer support body 240.

Coupling the thermistor 252 to the anode end 220 of the battery cell 208 rather than the cathode end 216 provides the benefit that there are no critical electrical parts between battery cell assemblies 204, and that wires do not cross over any high power bus. For example, if a wire of the thermistor 252 is pinched or sheared causing bare metal to be exposed through the wire insolation, the damaged wire is not at risk of being shorted via voltages of the neighboring battery cells 208 or by the power bus. In contrast, thermistors 252 attached to the middle of the battery cell body 212 would be surrounded by neighboring battery cell 208 voltages via the sleeveless battery cell 208 cans. Therefore, placing the thermistor 252 on or near the anode end 220 of the battery cell 208 provides increased safety and isolation of the thermistor 252 and thermistor 252 wires.

The position of the thermistor 252 on or near the anode end 220 of the battery cell 208 further provides the benefit of flexibility in mechanical attachment of the thermistor 252. By providing through holes 248 in the outer support body 240, the thermistor 252 may be coupled to the battery cell 208, removed from the battery cell 208, or otherwise accessed while the plurality of battery cells 208 are seated in the inner cavity. Additionally, the through holes 248 provide access to the anode end 220 of any battery cell 208 in the battery cell assembly 204. Therefore, it remains feasible to place or remove a thermistor 252 corresponding to any battery cell 208 in the matrix after the plurality battery cells 208 has been seated in the inner cavity. In some embodiments, the thermistor 252 is coupled to a battery cell 208 before either end of the battery cell 208 has been seated in an opening 244, or while only one end of the battery cell 208 has been seated in an opening 244.

Additionally, in a case of manufacturing malfunction or testing, the thermistor 252 may be replaced without removal of the battery cell 208 from the battery cell assembly 204. For example, if a battery cell assembly 204 fails or if the thermistor 252 overheats during an in-line test, the thermistor 252 may be easily removed and replaced so that further tests can be performed on the on the battery cell assembly 204.

The internal power source 120 may further include a plurality of fans 304 and a plurality of airflow tunnels 308. As such, one, some, or all of the airflow tunnels 308 includes a fan 304. In other embodiments, one, some, or all of the fans 304 are positionable within the power source housing 200 of the internal power source 120. For example, the internal power source 120 includes two fans 162 positioned within the internal cavity 206 of the power source housing 200. The plurality of fans 304 is operable to circulate airflow within the sealed power source housing 200 of the internal power source 120.

Coupling the thermistor 252 to the anode end 220 of the battery cell 208 provides another benefit in that the thermistor 252 is less susceptible to temperature variations due to air cooling and air turbulence caused by the plurality of fans 304. The middle of a battery cell body 212 located near the airflow tunnels 308 may be exposed to gradients and fast temperature variations due to air turbulence. The air cooling the induces a temperature gradient in the cell and creates a hot spot in the wake of the airflow. Providing the thermistor 252 on or near the anode end 220 of the battery cell 208 therefore provides more reliable temperature measurement than if the thermistor 252 were placed on the middle of the battery cell body 212.

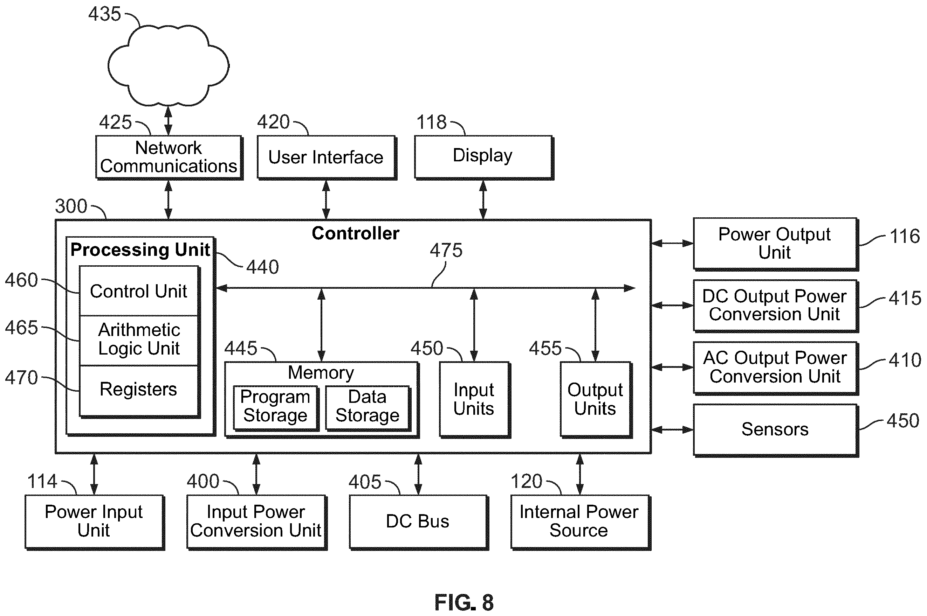

FIG. 8 is a generalized schematic illustration of the controller 300 included in power supply 100. The controller 300 is electrically and/or communicatively connected to a variety of modules or components of the power supply 100. For example, the controller 300 may be connected to the power input unit 114, the power output unit 116, the display 118, and the internal power source 120. Persons skilled in the art will recognize that electrical and/or communicative connection between the controller 300 and the internal power source 120 includes electrical and/or communicative connection between the controller 300 and components included in the internal power source 120, such as, but not limited to the plurality of battery cell assemblies 204 and components included therein (e.g., the plurality of thermistors 252 and the plurality of battery cells 208).

The controller 300 is additionally electrically and/or communicatively connected to an input power conversion unit 400, a DC bus 405, an AC output power conversion unit 410, and a DC output power conversion unit 415, a user interface 420, a network communications module 425, and a plurality of sensors 430. The input power conversion unit 400, DC bus 405, AC output power conversion unit 410, and DC output power conversion unit 415 will be described in more detail below.

The network communications module 425 is connected to a network 435 to enable the controller 300 to communicate with peripheral devices in the network 435, such as a smartphone or a server. The sensors 430 include, for example, one or more voltage sensors 430, one or more current sensors 430, one or more temperature sensors 430, and/or one or more additional sensors 430 used for measuring electrical and/or other characteristics of the power supply 100. Each of the sensors 430 generates one or more output signals that are provided to the controller 300 for processing and evaluation. The user interface 420 is included to provide user control of the power supply 100. The user interface 420 can include any combination of digital and analog input devices required to achieve a desired level of control for the power supply 100. For example, the user interface 420 may include a plurality of knobs, a plurality of dials, a plurality of switches, a plurality of buttons, or the like. In some embodiments, the user interface 420 is integrated with the display 118 (e.g., as a touchscreen display 118).

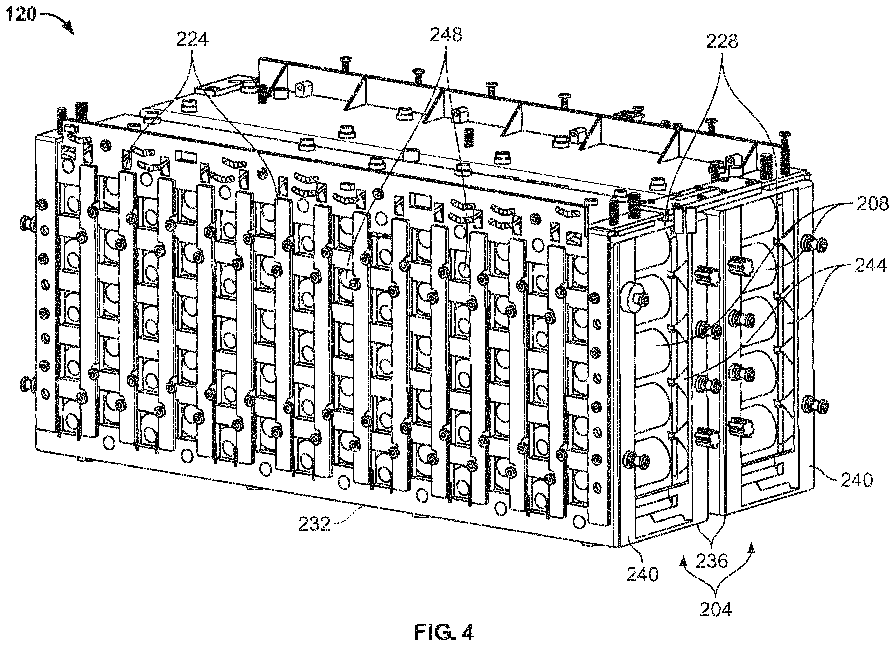

The controller 300 includes combinations of hardware and software that are operable to, among other things, control the operation of the power supply 100, communicate over the network 435, receive input from a user via the user interface 420, provide information to a user via the display 118, etc. For example, the controller 300 includes, among other things, a processing unit 440 (e.g., a microprocessor, a microcontroller, an electronic processor, an electronic controller 300, or another suitable programmable device), a memory 445, input units 450, and output units 455. The processing unit 440 includes, among other things, a control unit 460, an arithmetic logic unit ("ALU") 465, and a plurality of registers 470 (shown as a group of registers 470 in FIG. 4A), and is implemented using a known computer architecture (e.g., a modified Harvard architecture, a von Neumann architecture, etc.). The processing unit 440, the memory 445, the input units 450, and the output units 455, as well as the various modules or circuits connected to the controller 300 are connected by one or more control and/or data buses (e.g., common bus 475). The control and/or data buses are shown generally in FIG. 9 for illustrative purposes. Although the controller 300 is illustrated in FIG. 9 as one controller 300, the controller 300 could also include multiple controllers configured to work together to achieve a desired level of control for the power supply 100. As such, any control functions and processes described herein with respect to the controller 300 could also be performed by two or more controllers functioning in a distributed manner.

The memory 445 is a non-transitory computer readable medium and includes, for example, a program storage area and a data storage area. The program storage area and the data storage area can include combinations of different types of memory 445, such as a read only memory 445 ("ROM"), a random access memory 445 ("RAM") (e.g., dynamic RAM ["DRAM"], synchronous DRAM ["SDRAM"], etc.), electrically-erasable programmable ROM ("EEPROM"), flash memory 445, a hard disk, an SD card, or other suitable magnetic, optical, physical, or electronic memory 445 devices. The processing unit 440 is connected to the memory 445 and is configured to execute software instructions that are capable of being stored in a RAM of the memory 445 (e.g., during execution), a ROM of the memory 445 (e.g., on a generally permanent basis), or another non-transitory computer readable medium such as another memory 445 or a disc. Software included in the implementation of the power supply 100 and controller 300 can be stored in the memory 445 of the controller 300. The software includes, for example, firmware, one or more applications, program data, filters, rules, one or more program modules, and other executable instructions. The controller 300 is configured to retrieve from the memory 445 and execute, among other things, instructions related to the control processes and methods described herein. In other embodiments, the controller 300 includes additional, fewer, or different components.

During operation of the power supply 100, the controller 300 is configured to monitor voltage, current, temperature, and/or other signals received from the various components described above. For example, the controller 300 is configured to monitor voltage signals received from the internal power source 120 when the internal power source 120 is charged by an external power source connected to the power input unit 114. As another example, the controller 300 is configured to monitor voltage signals received from the internal power source 120 when the internal power source 120 provides power to one or more peripheral devices connected to the power output unit 116.

The controller 300 may be configured to monitor the individual, maximum, minimum, and/or average temperatures measured by the plurality of thermistors 252. For example, the controller 300 may be configured to receive an input signal, via the plurality of first thermistors 252, corresponding to a temperature of the respective first battery cells 208. The controller 300 may then determine if the respective battery cell 208 is overtemperature by comparing the input signal to a value corresponding to a maximum temperature threshold for the respective battery cell 208. The controller 300 may then output an overtemperature signal when the input signal is greater than the maximum temperature threshold. The display 118 may be configured to receive the overtemperature signal or other signal from the controller 300 indicative that an overtemperature event has occurred in the battery cell assembly 204. In response to receiving the overtemperature signal, the display 118 may be configured to provide an indication to a user that the battery cell assembly 204 is overtemperature.

In some embodiments, in response to a determination that the respective battery cell 208 is overtemperature, the controller 300 is further configured to disable the portable power supply 100. More generally, the controller 300 is configured to monitor and/or control power flow to and from the above-described components of power supply 100 that are electrically and communicatively coupled to the controller 300.

Thus, the disclosure provides, among other things, a portable power supply 100. Various features and advantages of the disclosure are set forth in the following claims. When used in this specification and claims, the terms "comprises" and "comprising" and variations thereof mean that the specified features, steps or integers are included. The terms are not to be interpreted to exclude the presence of other features, steps or components.

## Claims

1. A portable power supply (100) comprising:
a first battery cell assembly (204) including a first frame supporting a plurality of first battery cells (208), the first frame (228) having a first outer side, the first outer side having a plurality of first openings (244), each opening of the plurality of first openings having an end of a respective first battery cell of the plurality of first battery cells seated therein, the plurality of first openings at least partially exposing the plurality of first battery cells;
a second battery cell assembly (204) coupled to the first battery cell assembly, the second battery cell assembly including a second frame (228) supporting a plurality of second battery cells (208), the second frame having a second outer side, the second outer side being opposite the first outer side, the second outer side having plurality of second openings (244), each opening of the plurality of second openings having an end of a respective second battery cell of the plurality of second battery cells seated therein, the plurality of second openings at least partially exposing the plurality of second battery cells;
a plurality of first thermistors (252) disposed on a first subset of the plurality of first battery cells, each first thermistor located on a first end face of a respective first battery cell of the first subset, the first end face of each respective first battery cell of the first subset being adjacent to the first outer side; and
a plurality of second thermistors (252) disposed on a second subset of the plurality of second battery cells, each second thermistor located on a second end face of a respective second battery cell of the second subset, the second end face of each respective second battery cell of the second subset being adjacent to the second outer side.

2. The portable power supply (100) of claim 1, wherein the plurality of first battery cells (208) includes at least twenty battery cells, and the plurality of second battery cells (208) includes at least twenty battery cells, preferably wherein the plurality of first battery cells includes at least fifty battery cells, and the plurality of second battery cells includes at least fifty battery cells.

3. The portable power supply (100) of claim 1 or 2, wherein the first subset includes three battery cells (208), and the second subset includes three battery cells (208), preferably wherein the first subset includes three battery cells, and the second subset includes four battery cells.

4. The portable power supply (100) of any preceding claim, wherein the plurality of first battery cells (208) and the plurality of second battery cells (208) include cylindrical cells.

5. The portable power supply (100) of any preceding claim, wherein each first end face of the respective first battery cell (208) and each second end face of the respective second battery cell (208) are anode end faces (220).

6. The portable power supply (100) of any preceding claim, wherein each of the plurality of first battery cells (208) and each of the plurality of second battery cells (208) are connected by a wire to a bus bar (224) positioned adjacent to the respective first or second battery cell.

7. The portable power supply (100) of any preceding claim, further comprising
a controller (300) including an electronic processor configured to
receive an input signal, via the plurality of first thermistors (252), corresponding to a temperature of the respective first battery cell (208),
compare the input signal to a value corresponding to a maximum temperature threshold for the respective battery cell, and
output an overtemperature signal when the input signal is greater than the maximum temperature threshold.

8. A portable power supply (100) comprising:
a housing (102) having a plurality of sides defining an internal cavity (206); and
a battery cell assembly (204) positioned in the internal cavity, the battery cell assembly including
a frame (228) including
an inner support body defining a plurality of openings (244),
an outer support body defining a plurality of openings (244),
a plurality of battery cells (208) arranged in the frame, each of the plurality of battery cells including
a cathode end (216) seated in a respective opening of the plurality of openings defined in the inner support body,
an anode end (220) opposite the cathode end, the anode end seated in a respective opening of the plurality of openings defined in the outer support body, and
a body (212) extending between the cathode end and the anode end, and
a thermistor (252) disposed on a respective battery cell of the plurality of battery cells, the thermistor located nearer to the anode end than to the cathode end of the battery cell.

9. The portable power supply (100) of claim 8, wherein the thermistor (252) is located nearer to an anode end (220) than to a halfway point between the anode end and the cathode end (216), preferably wherein the cathode end includes a cathode face of a respective battery cell (208), the anode end includes an anode face of the respective battery cell, and the thermistor is located on the anode face.

10. The portable power supply (100) of claim 8 or 9, wherein the plurality of battery cells (208) includes cylindrical cells, and the thermistor (252) is disposed on a curved wall of the respective battery cell.

11. The portable power supply (100) of claim 8, 9 or 10, further comprising
a controller (300) including an electronic processor configured to
receive an input signal, via the thermistor (252), corresponding to a temperature of the respective battery cell (208),
compare the input signal to a value corresponding to a maximum temperature threshold for the respective battery cell, and
output an overtemperature signal when the input signal is greater than the maximum temperature threshold.

12. The portable power supply (100) of claim 11, further comprising
a display (118) configured to
receive the overtemperature signal,
in response to receiving the overtemperature signal, provide an indication that the battery cell assembly (204) is overtemperature.

13. The portable power supply (100) of claim 12, wherein the controller (300) is further configured to
in response to a determination that the respective battery cell (208) is overtemperature, disable the portable power supply.

14. The portable power supply (100) of any one of claims 8 to 13, wherein each of the plurality of battery cells (208) is connected by a wire to a bus bar (224) positioned adjacent to the respective battery cell, and/or wherein the battery cell assembly includes three thermistors (252) coupled to respective battery cells, preferably wherein the battery cell assembly includes four thermistors coupled to respective battery cells.

15. A method of manufacturing a portable power supply (100), the method comprising:
securing a plurality of battery cells (208) in corresponding openings of a frame (228) such that each end of a respective battery cell of the plurality of battery cells is seated in one of the openings; and
coupling thermistors (252) to a subset of the plurality of battery cells after securing the plurality of battery cells, each thermistor located on an end face of a respective battery cell.

## Patentansprüche

1. Tragbare Stromversorgung (100), umfassend:
eine erste Batteriezellenanordnung (204), einschließend einen ersten Rahmen, der eine Vielzahl von ersten Batteriezellen (208) trägt, wobei der erste Rahmen (228) eine erste Außenseite aufweist, wobei die erste Außenseite eine Vielzahl von ersten Öffnungen (244) aufweist, wobei jede Öffnung der Vielzahl von ersten Öffnungen ein darin platziertes Ende einer jeweiligen ersten Batteriezelle der Vielzahl von ersten Batteriezellen aufweist, wobei die Vielzahl von ersten Öffnungen die Vielzahl von ersten Batteriezellen zumindest zum Teil freilegt;
eine zweite Batteriezellenanordnung (204), die an die erste Batteriezellenanordnung gekoppelt ist, wobei die zweite Batteriezellenanordnung einen zweiten Rahmen (228) einschließt, der eine Vielzahl von zweiten Batteriezellen (208) trägt, wobei der zweite Rahmen eine zweite Außenseite aufweist, wobei die zweite Außenseite entgegengesetzt zu der ersten Außenseite ist, wobei die zweite Außenseite eine Vielzahl von zweiten Öffnungen (244) aufweist, wobei jede Öffnung der Vielzahl von zweiten Öffnungen ein darin platziertes Ende einer jeweiligen zweiten Batteriezelle der Vielzahl von zweiten Batteriezellen aufweist, wobei die Vielzahl von zweiten Öffnungen die Vielzahl von zweiten Batteriezellen zumindest zum Teil freilegt;
eine Vielzahl von ersten Thermistoren (252), die auf einem ersten Teilsatz der Vielzahl von ersten Batteriezellen angeordnet ist, wobei sich jeder erste Thermistor auf einer ersten Endfläche einer jeweiligen ersten Batteriezelle des ersten Teilsatzes befindet, wobei die erste Endfläche jeder jeweiligen ersten Batteriezelle des ersten Teilsatzes angrenzend an die erste Außenseite ist; und
eine Vielzahl von zweiten Thermistoren (252), die auf einem zweiten Teilsatz der Vielzahl von zweiten Batteriezellen angeordnet ist, wobei sich jeder zweite Thermistor auf einer zweiten Endfläche einer jeweiligen zweiten Batteriezelle des zweiten Teilsatzes befindet, wobei die zweite Endfläche jeder jeweiligen zweiten Batteriezelle des zweiten Teilsatzes angrenzend an die zweite Außenseite ist.

2. Tragbare Stromversorgung (100) nach Anspruch 1, wobei die Vielzahl von ersten Batteriezellen (208) mindestens zwanzig Batteriezellen einschließt und die Vielzahl von zweiten Batteriezellen (208) mindestens zwanzig Batteriezellen einschließt, vorzugsweise wobei die Vielzahl von ersten Batteriezellen mindestens fünfzig Batteriezellen einschließt und die Vielzahl von zweiten Batteriezellen mindestens fünfzig Batteriezellen einschließt.

3. Tragbare Stromversorgung (100) nach Anspruch 1 oder 2, wobei der erste Teilsatz drei Batteriezellen (208) einschließt und der zweite Teilsatz drei Batteriezellen (208) einschließt, vorzugsweise wobei der erste Teilsatz drei Batteriezellen einschließt und der zweite Teilsatz vier Batteriezellen einschließt.

4. Tragbare Stromversorgung (100) nach einem vorhergehenden Anspruch, wobei die Vielzahl von ersten Batteriezellen (208) und die Vielzahl von zweiten Batteriezellen (208) zylindrische Zellen einschließen.

5. Tragbare Stromversorgung (100) nach einem vorhergehenden Anspruch, wobei jede erste Endfläche der jeweiligen ersten Batteriezelle (208) und jede zweite Endfläche der jeweiligen zweiten Batteriezelle (208) Anodenendflächen (220) sind.

6. Tragbare Stromversorgung (100) nach einem vorhergehenden Anspruch, wobei jede der Vielzahl von ersten Batteriezellen (208) und jede der Vielzahl von zweiten Batteriezellen (208) durch einen Draht mit einer Sammelschiene (224) verbunden sind, die angrenzend an die jeweilige erste oder zweite Batteriezelle positioniert ist.

7. Tragbare Stromversorgung (100) nach einem vorhergehenden Anspruch, ferner umfassend:
eine Steuereinheit (300), einschließend einen elektronischen Prozessor, der konfiguriert ist zum
Empfangen eines Eingabesignals mittels der Vielzahl von ersten Thermistoren (252), das einer Temperatur der jeweiligen ersten Batteriezelle (208) entspricht,
Vergleichen des Eingabesignals mit einem Wert, der einem maximalen Temperaturschwellenwert für die jeweilige Batteriezelle entspricht, und
Ausgeben eines Übertemperatursignals, wenn das Eingabesignal größer als der maximale Temperaturschwellenwert ist.

8. Tragbare Stromversorgung (100), umfassend:
ein Gehäuse (102), das eine Vielzahl von Seiten aufweist, die einen internen Hohlraum (206) definieren; und
eine Batteriezellenanordnung (204), die in dem internen Hohlraum positioniert ist, wobei die Batteriezellenanordnung einschließt:
einen Rahmen (228), einschließend
einen inneren Tragekörper, der eine Vielzahl von Öffnungen (244) definiert,
einen äußeren Tragekörper, der eine Vielzahl von Öffnungen (244) definiert,
eine Vielzahl von Batteriezellen (208), die in dem Rahmen eingerichtet ist, wobei jede der Vielzahl von Batteriezellen einschließt:
ein Kathodenende (216), das in einer jeweiligen Öffnung der Vielzahl von Öffnungen platziert ist, die in dem inneren Tragekörper definiert ist,
ein Anodenende (220), das entgegengesetzt zu dem Kathodenende ist, wobei das Anodenende in einer jeweiligen Öffnung der Vielzahl von Öffnungen platziert ist, die in dem äußeren Tragekörper definiert ist, und
einen Körper (212), der sich zwischen dem Kathodenende und dem Anodenende erstreckt, und
einen Thermistor (252), der auf einer jeweiligen Batteriezelle der Vielzahl von Batteriezellen angeordnet ist, wobei sich der Thermistor näher zu dem Anodenende als zu dem Kathodenende der Batteriezelle befindet.

9. Tragbare Stromversorgung (100) nach Anspruch 8, wobei sich der Thermistor (252) näher zu dem Anodenende (220) als zu einem Punkt auf halbem Wege zwischen dem Anodenende und dem Kathodenende (216) befindet, vorzugsweise wobei das Kathodenende eine Kathodenfläche einer jeweiligen Batteriezelle (208) einschließt, das Anodenende eine Anodenfläche der jeweiligen Batteriezelle einschließt und sich der Thermistor auf der Anodenfläche befindet.

10. Tragbare Stromversorgung (100) nach Anspruch 8 oder 9, wobei die Vielzahl von Batteriezellen (208) zylindrische Zellen einschließt und der Thermistor (252) auf einer gewölbten Wand der jeweiligen Batteriezelle angeordnet ist.

11. Tragbare Stromversorgung (100) nach Anspruch 8, 9 oder 10, ferner umfassend:
eine Steuereinheit (300), einschließend einen elektronischen Prozessor, der konfiguriert ist zum:
Empfangen eines Eingabesignals mittels des Thermistors (252), das einer Temperatur der jeweiligen Batteriezelle (208) entspricht,
Vergleichen des Eingabesignals mit einem Wert, der einem maximalen Temperaturschwellenwert für die jeweilige Batteriezelle entspricht, und
Ausgeben eines Übertemperatursignals, wenn das Eingabesignal größer als der maximale Temperaturschwellenwert ist.

12. Tragbare Stromversorgung (100) nach Anspruch 11, ferner umfassend:
eine Anzeige (118), die konfiguriert ist zum
Empfangen des Übertemperatursignals,
als Reaktion auf das Empfangen des Übertemperatursignals Bereitstellen einer Angabe, dass die Batteriezellenanordnung (204) bei einer Übertemperatur ist.

13. Tragbare Stromversorgung (100) nach Anspruch 12, wobei die Steuereinheit (300) ferner konfiguriert ist zum
als Reaktion auf eine Bestimmung, dass die jeweilige Batteriezelle (208) bei einer Übertemperatur ist, Deaktivieren der tragbaren Stromversorgung.

14. Tragbare Stromversorgung (100) nach einem der Ansprüche 8 bis 13, wobei jede der Vielzahl von Batteriezellen (208) durch einen Draht mit einer Sammelschiene (224) verbunden ist, die angrenzend an die jeweilige Batteriezelle positioniert ist, und/oder wobei die Batteriezellenanordnung drei Thermistoren (252) einschließt, die an jeweilige Batteriezellen gekoppelt sind, vorzugsweise wobei die Batteriezellenanordnung vier Thermistoren einschließt, die an jeweilige Batteriezellen gekoppelt sind.

15. Verfahren zur Herstellung einer tragbaren Stromversorgung (100), wobei das Verfahren umfasst:
Sichern einer Vielzahl von Batteriezellen (208) in entsprechenden Öffnungen eines Rahmens (228), so dass jedes Ende einer jeweiligen Batteriezelle der Vielzahl von Batteriezellen in einer der Öffnungen platziert ist; und
Koppeln von Thermistoren (252) an einen Teilsatz der Vielzahl von Batteriezellen nach dem Sichern der Vielzahl von Batteriezellen, wobei sich jeder Thermistor auf einer Endfläche einer jeweiligen Batteriezelle befindet.

## Revendications

1. Alimentation portable (100), comprenant :
un premier ensemble d'éléments de batterie (204) comprenant un premier cadre supportant une pluralité de premiers éléments de batterie (208), le premier cadre (228) comportant un premier côté extérieur, le premier côté extérieur comportant une pluralité de premières ouvertures (244), chaque ouverture de la pluralité de premières ouvertures comportant, logée dans celle-ci, une extrémité d'un premier élément de batterie respectif de la pluralité de premiers éléments de batterie, la pluralité de premières ouvertures exposant, au moins en partie, la pluralité de premiers éléments de batterie ;
un second ensemble d'éléments de batterie (204) couplé au premier ensemble d'éléments de batterie, le second ensemble d'éléments de batterie comprenant un second cadre supportant une pluralité de seconds éléments de batterie (208), le second cadre (228) comportant un second côté extérieur, le second côté extérieur étant opposé au premier côté extérieur, le second côté extérieur comportant une pluralité de secondes ouvertures (244), chaque ouverture de la pluralité de secondes ouvertures comportant, logée dans celle-ci, une extrémité d'un second élément de batterie respectif de la pluralité de seconds éléments de batterie, la pluralité de secondes ouvertures exposant, au moins en partie, la pluralité de seconds éléments de batterie ;
une pluralité de premières thermistances (252) disposées sur un premier sous-ensemble de la pluralité de premiers éléments de batterie, chaque première thermistance étant située sur une première face d'extrémité d'un premier élément de batterie respectif du premier sous-ensemble, la première face d'extrémité de chaque premier élément de batterie respectif du premier sous-ensemble étant adjacente au premier côté extérieur ; et
une pluralité de secondes thermistances (252) disposées sur un second sous-ensemble de la pluralité de seconds éléments de batterie, chaque seconde thermistance étant située sur une seconde face d'extrémité d'un second élément de batterie respectif du second sous-ensemble, la seconde face d'extrémité de chaque second élément de batterie respectif du second sous-ensemble étant adjacente au second côté extérieur.

2. Alimentation portable (100) selon la revendication 1, la pluralité de premiers éléments de batterie (208) comprenant au moins vingt éléments de batterie et la pluralité de seconds éléments de batterie (208) comprenant au moins vingt éléments de batterie, de préférence la pluralité de premiers éléments de batterie comprenant au moins cinquante éléments de batterie et la pluralité de seconds éléments de batterie comprenant au moins cinquante éléments de batterie.

3. Alimentation portable (100) selon la revendication 1 ou 2, le premier sous-ensemble comprenant trois éléments de batterie (208) et le second sous-ensemble comprenant trois éléments de batterie (208), de préférence le premier sous-ensemble comprenant trois éléments de batterie et le second sous-ensemble comprenant quatre éléments de batterie.

4. Alimentation portable (100) selon l'une quelconque des revendications précédentes, la pluralité de premiers éléments de batterie (208) et la pluralité de seconds éléments de batterie (208) comprenant des éléments cylindriques.

5. Alimentation portable (100) selon l'une quelconque des revendications précédentes, chaque première face d'extrémité du premier élément de batterie (208) respectif et chaque seconde face d'extrémité du second élément de batterie (208) respectif étant des faces d'extrémité anodique (220).

6. Alimentation portable (100) selon l'une quelconque des revendications précédentes, chaque premier élément de batterie de la pluralité de premiers éléments de batterie (208) et chaque second élément de batterie de la pluralité de seconds éléments de batterie (208) étant connectés par un fil à une barre omnibus (224) positionnée à proximité du premier ou du second élément de batterie respectif.

7. Alimentation portable (100) selon l'une quelconque des revendications précédentes, comprenant en outre :
un dispositif de commande (300) comprenant un processeur électronique configuré pour :
recevoir, par l'intermédiaire de la pluralité de premières thermistances (252), un signal d'entrée correspondant à une température du premier élément de batterie (208) respectif,
comparer le signal d'entrée à une valeur correspondant à un seuil de température maximale pour l'élément de batterie respectif, et
délivrer en sortie un signal de température excessive lorsque le signal d'entrée est supérieur au seuil de température maximale.

8. Alimentation portable (100), comprenant :
un boîtier (102) comportant une pluralité de côtés définissant une cavité interne (206) ; et
un ensemble d'éléments de batterie (204) positionné dans la cavité interne, l'ensemble d'éléments de batterie comprenant :
un cadre (228) comprenant :
un corps de support intérieur définissant une pluralité d'ouvertures (244),
un corps de support extérieur définissant une pluralité d'ouvertures (244),
une pluralité d'éléments de batterie (208) agencés dans le cadre, chaque élément de batterie de la pluralité d'éléments de batterie comprenant :
une extrémité cathodique (216) logée dans une ouverture respective de la pluralité d'ouvertures définies dans le corps de support intérieur,
une extrémité anodique (220) opposée à l'extrémité cathodique, l'extrémité anodique étant logée dans une ouverture respective de la pluralité d'ouvertures définies dans le corps de support extérieur, et
un corps (212) s'étendant entre l'extrémité cathodique et l'extrémité anodique, et
une thermistance (252) disposée sur un élément de batterie respectif de la pluralité d'éléments de batterie, la thermistance étant située plus près de l'extrémité anodique que de l'extrémité cathodique de l'élément de batterie.

9. Alimentation portable (100) selon la revendication 8, la thermistance (252) étant située plus près d'une extrémité anodique (220) que d'un point médian entre l'extrémité anodique et l'extrémité cathodique (216), de préférence l'extrémité cathodique comprenant une face cathodique d'un élément de batterie (208) respectif, l'extrémité anodique comprenant une face anodique de l'élément de batterie respectif, et la thermistance étant située sur la face anodique.

10. Alimentation portable (100) selon la revendication 8 ou 9, la pluralité d'éléments de batterie (208) comprenant des éléments cylindriques, et la thermistance (252) étant disposée sur une paroi incurvée de l'élément de batterie respectif.

11. Alimentation portable (100) selon la revendication 8, 9 ou 10, comprenant en outre :
un dispositif de commande (300) comprenant un processeur électronique configuré pour :
recevoir, par l'intermédiaire de la thermistance (252), un signal d'entrée correspondant à une température de l'élément de batterie (208) respectif,
comparer le signal d'entrée à une valeur correspondant à un seuil de température maximale pour l'élément de batterie respectif, et
délivrer en sortie un signal de température excessive lorsque le signal d'entrée est supérieur au seuil de température maximale.

12. Alimentation portable (100) selon la revendication 11, comprenant en outre :
une unité d'affichage (118), configurée pour :
recevoir le signal de température excessive,
en réponse à la réception du signal de température excessive, fournir une indication indiquant que l'ensemble d'éléments de batterie (204) présente une température excessive.

13. Alimentation portable (100) selon la revendication 12, le dispositif de commande (300) étant en outre configuré pour :
en réponse à une détermination du fait que l'élément de batterie (208) respectif présente une température excessive, désactiver l'alimentation portable.

14. Alimentation portable (100) selon l'une quelconque des revendications 8 à 13, chaque élément de batterie de la pluralité d'éléments de batterie (208) étant connecté par un fil à une barre omnibus (224) positionnée à proximité de l'élément de batterie respectif, et/ou l'ensemble d'éléments de batterie comprenant trois thermistances (252) couplées aux éléments de batterie respectifs, de préférence l'ensemble d'éléments de batterie comprenant quatre thermistances couplées aux éléments de batterie respectifs.

15. Procédé de fabrication d'une alimentation portable (100), le procédé consistant à :
fixer une pluralité d'éléments de batterie (208) dans des ouvertures correspondantes d'un cadre (228) de telle sorte que chaque extrémité d'un élément de batterie respectif de la pluralité d'éléments de batterie soit logée dans l'une des ouvertures ; et
coupler des thermistances (252) à un sous-ensemble de la pluralité d'éléments de batterie après avoir fixé la pluralité d'éléments de batterie, chaque thermistance étant située sur une face d'extrémité d'un élément de batterie respectif.
